# EUROPEAN PATENT APPLICATION

(11) **EP 4 345 736 A1**
(43) Date of publication of application: **03.04.2024**
(21) Application number: 22198729.0
(22) Date of filing: 29.09.2022
(51) Int. Cl.: G06T 5/00

(54) **EVALUATION OF ARTIFACT REMOVAL FROM MAGNETIC RESONANCE IMAGES USING NEURAL NETWORKS**

(71) Applicant: Koninklijke Philips N.V., 5656 AG Eindhoven (NL)
(72) Inventor: GESSERT, Nils Thorben, Eindhoven (NL); NIELSEN, Tim, Eindhoven (NL); PEZZOTTI, Nicola, 5656AG Eindhoven (NL)
(74) Representative: Philips Intellectual Property & Standards

(57) **Abstract**

Disclosed herein is a medical system (100, 300). The execution of the machine executable instructions (120) causes a computational system (104) to: receive (200) a measured magnetic resonance image (124); calculate (202) a gradient-based saliency map (126) for a first output of an image-to-image neural network (122) with the measured magnetic resonance image as input to the image-to-image neural network, wherein the gradient-based saliency map is calculated using a patch based algorithm with a predetermined patch size; determine (204) an evaluation mapping (130) using at least the gradient-based saliency map; produce (206) a warning signal (134) if the evaluation mapping meets a predetermined criterion; and receive (208) an output image (128) as a second output of the measured image-to-image neural network in response to inputting the measured magnetic resonance image into the image-to-image neural network.

## Description

### FIELD OF THE INVENTION

The invention relates to magnetic resonance imaging, in particular to artifact removal from magnetic resonance images.

### BACKGROUND OF THE INVENTION

Magnetic Resonance Imaging (MRI) uses a large static magnetic field to align the nuclear spins of atoms as part of the procedure for imaging within the body of a patient. This large static magnetic field is referred to as the BO field or the main magnetic field. Time varying magnetic gradient fields and Radio-Frequency (RF) signals may be used to manipulate the orientation the nuclear spins to emit RF signals that contain and encoded representation of the subject in k-space. These RF signals can then be sampled and transformed into an image of the subject using a Fourier transform. A feature of magnetic resonance imaging is that it often takes a significant amount of time to acquire the medical imaging data necessary to reconstruct a medical image. During the acquisition of the medical imaging data the subject may move voluntarily, there may be Radio-Frequency (RF) noise received or other events may occur which may result in image corruption or artifacts. Various types of image filters may be used to remove or reduce image artifacts.

The journal article Hu et. al., "Learning to Predict Error for MRI Reconstruction" arXiv:2002.05582v3, discloses that predictive uncertainty estimated by the current methods does not highly correlate with prediction error by decomposing the latter into random and systematic errors, and showing that the former is equivalent to the variance of the random error. In addition, they observe that current methods unnecessarily compromise performance by modifying the model and training loss to estimate the target and uncertainty jointly.

### SUMMARY OF THE INVENTION

The invention provides for a medical system, a computer program, and a method in the independent claims.

Neural networks may be used to remove image artifacts such as noise, deblurring, anti-ringing, and others. A difficulty is that an image-to-image neural networks trained to function a magnetic resonance imaging artifact removal filter may sometimes modify the image in undesirable ways. For example, if the image-to-image neural network is trained to remove noise from a measured magnetic resonance image it may modify the measured magnetic resonance image in an undesirable way. For example, it may oversmooth the image or possibly not remove enough noise. Embodiments may provide a means for detecting when an image-to-image neural network is not functioning properly. This may be achieved by calculating a gradient-based saliency map for the measured magnetic resonance image input into the image-to-image neural network. The gradient-based saliency map may, for example be calculated by calculating the partial derivate of output pixels with respect to the input image and using this information to calculate the saliency map for blocks or patches of voxels. The gradient-based saliency map may be used to determine or calculate an evaluation mapping which is used to evaluate if the image-to-image neural network is properly removing the image artifact within a particular patch.

Image quality improvement and noise reduction are crucial aspects of medical image processing as it affects diagnostic confidence. For MRI, noise reduction can be achieved by averaging the signal of multiple acquisitions. However, as this procedure increases scan time, it is usually not desirable in clinical practice. Instead, image processing techniques after acquisition can be used to reduce noise. In the past, filter-based methods have often been employed. However, these methods often suffer from reduced sharpness and image detail. More recently, machine learning and deep learning-based approaches have gained popularity for medical image denoising due to substantial improvements over classical methods.

While machine learning and deep learning-based artifact removal methods, such as denoising methods, have shown promising results, they can fail in a subtle way, that is not immediately clear to the reader/radiologist. For example, a denoiser might not denoise a certain region in the image at all, e.g., due to non-optimal training settings or due to image pre-processing steps that change the appearance of the noise. Examples for the latter are steps such as anti-ringing filtering or geometry correction algorithms. We will refer to this as a "no-denoising" failure. Another type of failure is "oversmoothing" where the denoiser removes too much noise, including structure that might be important for image assessment. Oversmoothing is usually more subtle and the level of acceptable smoothing depends on personal preference. Thus, it is a much harder task to detect.

In one aspect the invention provides for a medical system that comprises a memory that stores machine-executable instructions and an image-to-image neural network configured as a magnetic resonance imaging artifact removal filter. A magnetic resonance imaging artifact removal filter as used herein encompasses a filtering module or neural network that receives as input a magnetic resonance image and then outputs a magnetic resonance image with an artifact removed from the image. This may either be done in a mode where the image is provided without the artifact or in a residual mode. In a residual mode the contribution to the image from the artifact is provided. For example, then a filtered magnetic resonance image can be provided by subtracting the residual output from the original image that was input into the image-to-image neural network. Both types of neural networks the direct filtering or the residual mode, are essentially equivalent.

The medical system further comprises a computational system. Execution of the machine-executable instructions causes the computational system to receive a measured magnetic resonance image. A measured magnetic resonance image is a magnetic resonance image. The term measured magnetic resonance image is a label to identify a particular magnetic resonance image. In this case it is a magnetic resonance image that has been acquired using a magnetic resonance imaging system. Execution of the machine-executable instructions further causes the computational system to calculate a gradient-based saliency map for a first output of the image-to-image neural network with the measured magnetic resonance image as input to the image-to-image neural network. The gradient-based saliency map is calculated using a patch-based algorithm with a predetermined patch size.

Saliency maps are mappings which highlight the input pixels that were relevant for the particular image output by the image-to-image neural network. A gradient-based saliency map is therefore a saliency map calculated using gradients or a derivative to map the effect of the input pixels on the resulting output image. Instead of calculating the gradient-based saliency map for every single pixel, it is done in terms of blocks or patches. I.e., a subset of pixels or voxels is selected on a grid and for each pixel or voxel on the grid, a saliency map is calculated. Then, each calculated saliency map is cropped to the region around its pixel of origin. The size of this crop is the patch size. All these patches are stitched together to form the final saliency map. Patch overlap is possible by using weighted averaging in the overlapping regions. The predetermined patch size determines the patch or block size for a group of voxels for which the gradient-based saliency map is calculated.

Execution of the machine-executable instructions further causes the computational system to determine an evaluation mapping using at least the gradient-based saliency map. The evaluation mapping is a mapping which is derived from the gradient-based saliency map. Execution of the machine-executable instructions further causes the computational system to produce a warning signal if the evaluation mapping meets a predetermined criterion. The warning signal could take different forms in different examples. For example, the warning signal in some instances could cause data to be displayed or presented to the operator of the medical system.

In other examples the warning signal could cause a change in how the measured magnetic resonance image has its image artifact removed. For example, it may cause the image-to-image neural network to be changed or changed to an algorithmic noise filter. In other examples it may cause the image-to-image neural network to not be used. For example, it may be better to present the measured magnetic resonance image to an operator or physician without noise filtering if there is a failure in the image-to-image neural network detected. Execution of the machine-executable instructions further causes the computational system to receive an output image as a second output of the measured image-to-image neural network in response to inputting the measured magnetic resonance image into the image-to-image neural network.

The calculation of the gradient-based saliency map may be performed in several different ways. For example, the image-to-image neural network may be configured such that it outputs the output image and the gradient-based saliency map at the same time. This would for example entail a modification of the image-to-image neural network. In other examples, since the saliency map is a gradient-based saliency map, the image-to-image neural network could be used to calculate this gradient-based saliency map without modification. This would entail inputting the measured magnetic resonance image and several modifications of the measured magnetic resonance image in order to calculate the gradient. For example, if one wanted to calculate the effect of changing one pixel, one could make several variations of the measured magnetic resonance image with this pixel value varied in order to calculate a gradient effect on the resulting pixels of the output image. Such an approach may be computationally intensive but could be performed without modifying the image-to-image neural network or constructing it specially to produce the gradient-based saliency map. Some neural network libraries, such at the torch library may calculate the partial derivative using backpropagation.

This embodiment may be beneficial because the evaluation mapping and the warning signal may provide a means for detecting when the image-to-image neural network is not performing artifact removal well or is possibly modifying the output image in an undesirable way.

An example implementation follows below:
1. The image-to-image neural network to be analyzed is prepared for gradient calculation through back-propagation. This is for example possible by default for the torch library.

2. The module for producing the maps from processed/denoised images is set up. In pseudocode, the module executes the following operations below. As an example of one implementation, pseudo code which enable the calculation of a gradient-based saliency map is provided below:

```
 step_size = 5
 box_size = 10
 width, height = image_shape
 saliency_map = zeros(image_shape)
 mask = zeros(image_shape)
 for x in range(0, width, step_size):
                for y (range(0, height, step_size):
                          map_at_x_y = partial_derivative(denoised_image[x, y], image)
                          lower_x = max(0, x - (box_size // 2))
                          upper_x = min(width, x + (box_size // 2))
                          lower_y = max(0, y - (box_size // 2))
                          upper_y = min(height, y + (box_size // 2))
                          saliency_map[lower_x:upper_x, lower_y:upper_y] +=
                          transform_patch(map_at_x_y[lower_x:upper_x,
                                    lower_y:upper_y])
                          mask[lower_x:upper_x, lower_y:upper_y] +=
 ones(map_at_x_y[lower_x:upper_x, lower_y:upper_y].shape)
 saliency_map /= mask
```

In the algorithm above, the box_size is the patch size. The algorithm has a step size and box size that is set. The step size defines how coarse the generated saliency map is going to be (larger step size equals a coarser map). In the above example step_size is set to 5 and the box_size is set to 10. This is only provided as an example. The setp_size and box_size can be set to other values.

A fine-grained saliency map looks more appealing but takes more time to generate as the partial derivate calculation is done more often. A reasonable value for the step size is 5 pixels. The box size determines how much of each pixel's response is incorporated into the map. As the response is localized, a size of 30 pixels is acceptable.

The transform_patch functionality determines how the gradient response at each pixel is incorporated into the map. Empirically, two transformations may be useful:
a. Per-patch min-max normalization: Each patch is normalized individually based on its minimum and maximum value. In the resulting map, high intensity responses will correspond to strong denoising (indicates oversmoothing) and low intensity to weak denoising (indicates no-denoising failure).
b. Patch maximum: Each patch is filled with the maximum intensity in the patch.
Empirically, weak denoising areas show a very high intensity peak exactly at the pixel while strong denoising areas have a spread-out response with a lower peak.

3. (optional) The module for generating an entropy map is set up. The module executes similar operations as described in 2., except for the following changes:
a. The partial derivative is not calculated, instead the input image is used.
b. The transform_patch function calculates Shannon's entropy over the image patch. The entire patch is filled with the resulting entropy value.
c. The box size and step size are chosen to be smaller to produce reasonable entropy maps: a box size of 8 and a step size of 3 produce a good result.
d. The final entropy map is thresholded to suppress small values (leading to better looking maps).

4. (optional) A module is set up that take the saliency map from step 2 and the entropy map from step 3 and produces a new map by pixel-wise multiplication.

5. (optional) A module is set up which takes the result from step 2 and step 3 to produce a 2D saliency/entropy histogram.

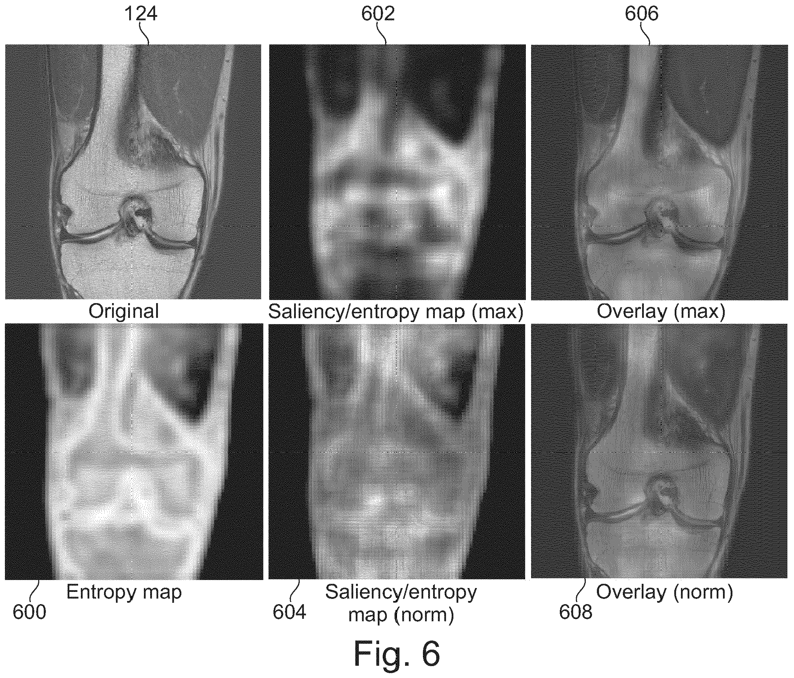

6. (optional) A module is set up which takes the 2D histogram from step 5 and calculates metric values that indicates denoising failure. The metric calculations can include:
a. Sum of histogram values in the low-denoising/mid-to-high entropy region (see Figure 6). A high metric value indicates a low-denoising type failure.
b. Center-of-mass in the high entropy region. Depending on the transform_patch method, the resulting value can indicate oversmoothing in important high entropy regions.

7. (optional) A module is set up that segments the patient anatomy in the input image.

8. (optional) A module is set up that combines the segmentation from step 7 with the map from step 4 to indicates denoising failure for each anatomical region. Based on user settings, the module is configured to produce warnings in case there is a problem in an anatomical region that is important in the current scan.

9. (optional) A display module is set up which shows the results to the user:
a. The map from step 4 (either directly, on user demand, or when triggered by an automated algorithm).
b. The metric value and their interpretation from step 6 (this can trigger the showing of the map for a)
c. A region-specific map from step 8.

In another embodiment execution of the machine-executable instructions further causes the computational system to calculate an entropy map for the magnetic resonance image. The entropy map is calculated using the predetermined patch size. For example, Shannon's entropy may be calculated on a patch-wise basis for each of the patches. The evaluation mapping is determined using the gradient-based saliency map and the entropy map. In some examples the evaluation map can be determined by using the gradient-based saliency map and the entropy map as separate values. In other examples, the gradient-based saliency map and the entropy map may be multiplied by each other. In either case the predetermined criterion can be applied to this for providing the warning signal.

In another embodiment the evaluation mapping comprises a histogram calculated from the gradient-based saliency map and the entropy map. For example, the entropy value and a saliency value for a particular block or patch may be paired together. These pairs may then be used to form a histogram. By examining the histogram it may be possible to determine if denoising of the image is being performed properly.

In another embodiment execution of the machine-executable instructions further causes the computational system to calculate a smoothing measure from the histogram. A smoothing measure is a center of mass for the histogram above a predetermined entropy threshold. The histogram may be calculated from paired values of the gradient-based saliency map and the entropy map. To determine the smoothing measure first of all the histogram is limited to values above a predetermined entropy and then the center of mass for this region of the histogram is calculated. If the center of mass is above a predetermined entropy threshold then the warning signal may be provided. In this case execution of the machine-executable instructions further causes the computational system to provide the warning signal as an over-smoothing warning signal if the smoothing measure has a center of mass below a predetermined saliency map value.

Execution of the machine-executable instructions further causes the computational system to calculate a denoising measure from the histogram. The denoising measure is an average value calculated from values above a predetermined saliency map value threshold. Execution of the machine-executable instructions further causes the computational system to provide the warning signal as an insufficiently denoising warning signal if the denoising measure has a center of mass above a predetermined threshold value.

In another embodiment execution of the machine-executable instructions further causes the computational system to calculate a combined map by multiplying corresponding patches of the entropy map and the gradient-based saliency map together. This embodiment may be beneficial because multiplying the entropy map and the gradient-based saliency map may make is easier to interpret regions of the image which may have had their artifact such as smoothing improperly removed.

In another embodiment execution of the machine-executable instructions further causes the computational system to render an augmented magnetic resonance image. The augmented magnetic resonance image is formed by superimposing the combined map on the output image.

In another embodiment execution of the machine-executable instructions further causes the computational system to calculate an image segmentation that divides the output image into multiple anatomical regions by inputting either the measured magnetic resonance image or the output image into an anatomical segmentation algorithm. Execution of the machine-executable instructions further causes the computational system to calculate a segmentation measure for at least some of the multiple anatomical regions by calculating the average of the combined map within at least some of the multiple anatomical regions. Execution of the machine-executable instructions further causes the computational system to provide an anatomical region-specific warning signal if the segmentation measure is above a predetermined value threshold.

The anatomical segmentation algorithm may be any one of a variety of anatomical segmentation methods. For example, the measured magnetic resonance image or the output image may be registered to an anatomical atlas. In other examples a shape deformable model or deep learning based segmentation may be used. In any case, the segmentation may be provided using normal means. Within each of these segmentations the average of the value of patches within the combined map may be used to assign these anatomical-specific values by calculating an average of the combined map within at least some of the multiple anatomical regions. This may be useful because the warning signal may be used to indicate if a particular anatomical region may have not been filtered properly or accurately by the image-to-image neural network.

In another embodiment the gradient-based saliency map is calculated using a per patch min-max normalization.

In another embodiment the gradient-based saliency map is calculated using a per patch maximum.

In another embodiment execution of the machine-executable instructions further causes the computational system to replace the image-to-image neural network with an algorithmic magnetic resonance image artifact removal filter and recalculate the output image using the algorithmic magnetic resonance image artifact removal filter in response to the warning signal.

In another embodiment execution of the machine-executable instructions further causes the computational system to replace the image-to-image neural network with an alternative image-to-image neural network in response to the warning signal.

In another embodiment execution of the machine-executable instructions further causes the computational system to provide the warning signal when displaying the output image in response to the warning signal.

In another embodiment the medical system further comprises a magnetic resonance imaging system. The memory further stores pulse sequence commands configured to control the magnetic resonance imaging system to acquire measured k-space data. Execution of the machine-executable instructions further causes the computational system to acquire the measured k-space data by controlling the magnetic resonance imaging system with the pulse sequence commands. Execution of the machine-executable instructions further causes the computational system to reconstruct the measured magnetic resonance image from the measured k-space data.

In another embodiment the image-to-image neural network is a U-Net.

In another embodiment the image-to-image neural network is a cycle GAN neural network.

In another embodiment the image-to-image neural network is a fully convolutional neural network.

In another embodiment the neural network is a DenseNet.

In another embodiment the image-to-image neural network is an EfficientNet.

The image-to-image neural network may be trained using training data and a deep learning algorithm. For example, pairs of training data may be constructed from input images which have the image artifact present and a ground truth image which does not have the artifact present. An efficient means to collect these images would be to take magnetic resonance images that do not have the image artifact present and then to artificially add image artifact to it. This may for example be done in image space. In other examples the magnetic resonance image can be transformed back to k-space and the k-space data can be modified to simulate an image artifact and the modified k-space data transformed back to image space to provide the input image for training.

In another embodiment the image-to-image neural network is a vision transformer.

In another embodiment the image-to-image neural network is a fully connected neural network.

In another embodiment the magnetic resonance image artifact removal filter is a denoising filter.

In another embodiment the magnetic resonance image artifact removal filter is a motion artifact filter.

In another embodiment the magnetic resonance image artifact removal filter is a Gibbs Ringing artifact filter.

In another embodiment the magnetic resonance image artifact removal filter is a blurring artifact filter.

In another embodiment the magnetic resonance image artifact removal filter is a ghosting artifact filter.

In another embodiment the magnetic resonance image artifact removal filter is a folding artifact filter.

In another aspect the invention provides for a computer program that comprises machine-executable instructions and an image-to-image neural network configured as a magnetic resonance imaging artifact removal filter. Execution of the machine-executable instructions causes the computational system to receive a measured magnetic resonance image. Execution of the machine-executable instructions further causes the computational system to calculate a gradient-based saliency map for a first output of the image-to-image neural network with the measured magnetic resonance image as input to the measured image-to-image neural network. The gradient-based saliency map is calculated using a patch-based algorithm with a predetermined patch size. Execution of the machine-executable instructions further causes the computational system to determine an evaluation mapping using at least the gradient-based saliency map. Execution of the machine-executable instructions further causes the computational system to produce a warning signal if the evaluation mapping meets a predetermined criterion. Execution of the machine-executable instructions further causes the computational system to receive an output image as a second output of the measured image-to-image neural network in response to inputting the measured magnetic resonance image into the image-to-image neural network.

In another aspect the invention provides for a method of medical imaging. The method comprises receiving a measured magnetic resonance image. The method further comprises calculating a gradient-based saliency map for a first output of an image-to-image neural network with the measured magnetic resonance image as input to the measured image-to-image neural network. The image-to-image neural network is configured as a magnetic resonance imaging artifact removal filter. The gradient-based saliency map is calculated using a patch-based algorithm with a predetermined patch size. The method further comprises determining an evaluation mapping using at least the gradient-based saliency map. The method further comprises producing a warning signal if the evaluation mapping meets a predetermined criterion. The method further comprises receiving an output image as a second output of the measured image-to-image neural network in response to inputting the measured magnetic resonance image into the image-to-image neural network.

It is understood that one or more of the aforementioned embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

K-space data is defined herein as being the recorded measurements of radio frequency signals emitted by atomic spins using the antenna of a Magnetic resonance apparatus during a magnetic resonance imaging scan.

A Magnetic Resonance Imaging (MRI) image or MR image is defined herein as being the reconstructed two- or three-dimensional visualization of anatomic data contained within the k-space imaging data. This visualization can be performed using a computer.

### BRIEF DESCRIPTION OF THE DRAWINGS

In the following preferred embodiments of the invention will be described, by way of example only, and with reference to the drawings in which:
Fig. 1 illustrates an example of a medical system;
Fig. 2 shows a flow chart which illustrates a method of using the medical system of Fig. 1;
Fig. 3 illustrates an example of a medical system;
Fig.4 shows a flow chart which illustrates a method of using the medical system of Fig. 3;
Fig. 5 illustrates a measured magnetic resonance image and an output image;
Fig. 6 illustrates various examples of gradient-based saliency maps combined with an entropy map;
Fig. 7 shows an output image 128 that has oversmoothing;
Fig. 8 illustrates a further example with denoising in a T1 weighted brain scan;
Fig. 9 illustrates an example where there is a denoising failure;
Fig. 10 shows two examples of a histogram calculated from corresponding pairs of voxels from a gradient-based saliency map and an entropy map;
Fig. 11 shows a plot of a metric for detecting of a no-denoising failure;
Fig. 12 shows three examples of entropy saliency histograms; and
Fig. 13 illustrates the construction of an output for a user 1302 or a user interface which may be rendered

### DETAILED DESCRIPTION OF EMBODIMENTS

Like numbered elements in these figures are either equivalent elements or perform the same function. Elements which have been discussed previously will not necessarily be discussed in later figures if the function is equivalent.

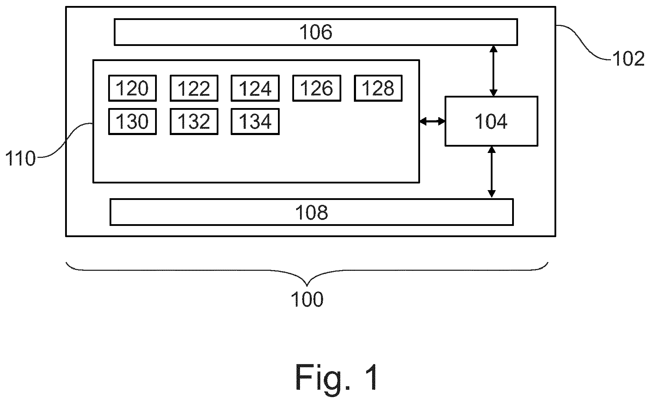

Fig. 1 illustrates an example of a medical system 100. The medical system 100 could be implemented in different ways. The medical system 100 could be implemented into a medical imaging system such as a magnetic resonance imaging system. The medical system 100 could also be located at a radiology department or located within a workstation. In another example the medical system 100 may be available over a network connection such as the internet. It may for example be implemented as a cloud-based service.

The medical system 100 is shown as comprising a computer 102. The computer 102 is intended to represent one or more computers at one or more locations. The computer 102 is shown as comprising a computational system 104. The computational system 104 may also represent one or more computational or computing cores that are located at one or more locations. The computational system 104 is shown as being in communication with an optional hardware interface 106 and an optional user interface 108. The hardware interface 106 may enable the computational system 104 to control and communicate with other components of the medical system 100. The user interface 108 may enable an operator to control and interact with the medical system 100. The computational system 104 is further shown as being in communication with a memory 110. The memory 110 is intended to represent one or more types of memory 110 that the computational system 104 has access to. In some examples the memory 110 is a non-transitory storage medium.

The memory 110 is shown as containing machine-executable instructions 120. The machine-executable instructions 120 contain instructions which enable the computational system 104 to perform basic tasks such as numerical computation and image processing. The computational system 104 may also enable the computational system 104 to control other components via the hardware interface 106 if they are present. The memory 110 is further shown as containing an image-to-image neural network 122 that is configured to receive a measured magnetic resonance image 124 and output an output image 128. The image-to-image neural network 122 is configured as an imaging artifact removal filter that removes artifacts from the measured magnetic resonance image 124. In some cases the image-to-image neural network 122 outputs the output image directly. In other examples, it works in a residual mode and the output image is obtained by subtracting the residual from the measured magnetic resonance image 124. The memory is further shown as containing a gradient-based saliency map 126 and an output image 128 that were received in response to inputting the measured magnetic resonance image 124 into the image-to-image neural network 122.

The memory 110 is further shown as containing an evaluation mapping 130 that was calculated from the gradient-based saliency map 126. The memory 110 is further shown as containing a predetermined criterion 132. The predetermined criterion 132 may be compared to the evaluation mapping 130. If the predetermined criterion 132 is met, then a warning signal 134 may be provided. This may have an effect on the user interface 108 or it may have an effect on the behavior of the medical system when filtering the measured magnetic resonance image 124. For example, it may cause a switch of the image-to-image neural network 122 to an algorithmic filtering algorithm or to a different image-to-image neural network 122.

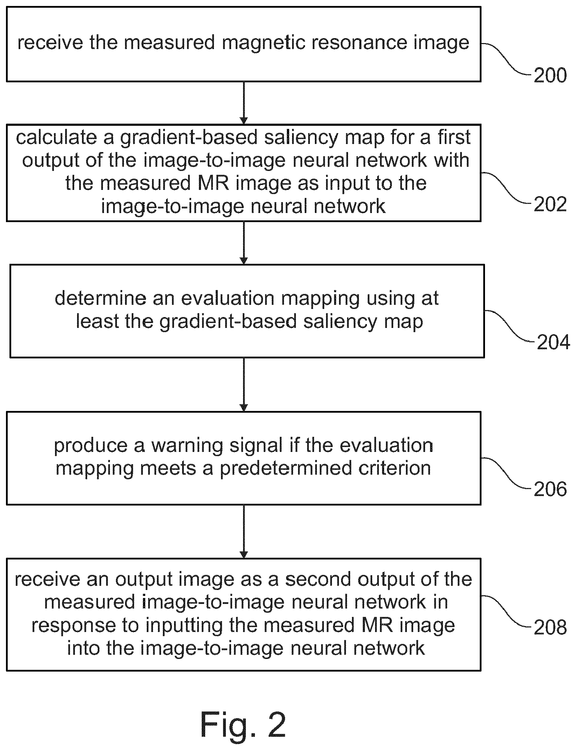

Fig. 2 shows a flowchart which illustrates a method of operating the medical system 100 of Fig. 1. First, in step 200, the measured magnetic resonance image 124 is received. Next, in step 202, a gradient-based saliency map 126 is calculated for a first output of the image-to-image neural network with the measured magnetic resonance image 124 as input to the image-to-image neural network 122. Then, in step 204, an evaluation mapping 130 is determined using at least the gradient-based saliency map 126. Next, in step 206, a warning signal 134 is produced if the evaluation mapping 130 meets the predetermined criterion 132. Then, in step 208, the output image 128 is received as a second output of the image-to-image neural network in response to inputting the measured magnetic resonance image 124 into the image-to-image neural network 122.

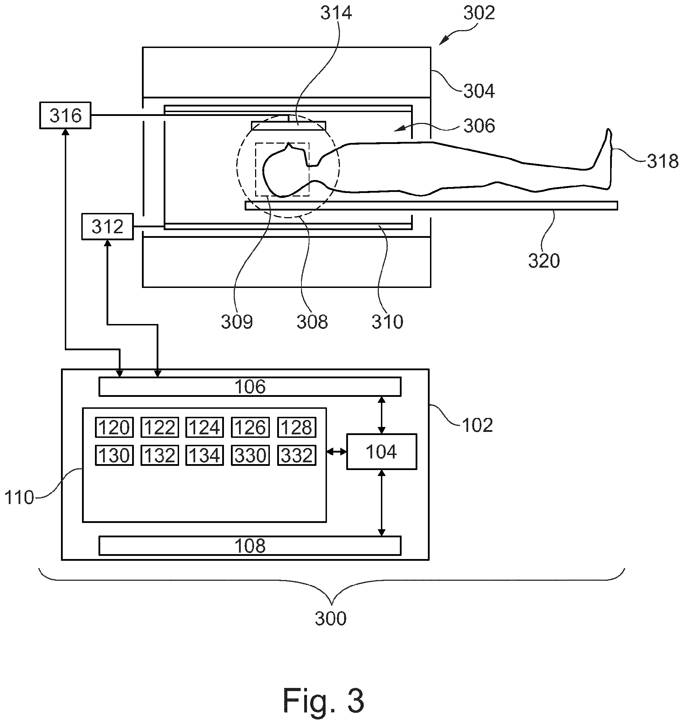

Fig. 3 illustrates a further example of a medical system 300. The medical system 300 is similar to the medical system 100 depicted in Fig. 1 except that the computational system 104 additionally controls a magnetic resonance imaging system 302.

The magnetic resonance imaging system 302 comprises a magnet 304. The magnet 304 is a superconducting cylindrical type magnet with a bore 306 through it. The use of different types of magnets is also possible; for instance it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils.

Within the bore 306 of the cylindrical magnet 304 there is an imaging zone 308 where the magnetic field is strong and uniform enough to perform magnetic resonance imaging. A field of view 309 is shown within the imaging zone 308. The k-space data that is acquired typically acquired for the field of view 309. The region of interest could be identical with the field of view 309 or it could be a sub volume of the field of view 309. A subject 318 is shown as being supported by a subject support 320 such that at least a portion of the subject 318 is within the imaging zone 308 and the field of view 309.

Within the bore 306 of the magnet there is also a set of magnetic field gradient coils 310 which is used for acquisition of measured k-space data to spatially encode magnetic spins within the imaging zone 308 of the magnet 304. The magnetic field gradient coils 310 connected to a magnetic field gradient coil power supply 312. The magnetic field gradient coils 310 are intended to be representative. Typically, magnetic field gradient coils 310 contain three separate sets of coils for spatially encoding in three orthogonal spatial directions. A magnetic field gradient power supply supplies current to the magnetic field gradient coils. The current supplied to the magnetic field gradient coils 310 is controlled as a function of time and may be ramped or pulsed.

Adjacent to the imaging zone 308 is a radio-frequency coil 314 for manipulating the orientations of magnetic spins within the imaging zone 308 and for receiving radio transmissions from spins also within the imaging zone 308. The radio frequency antenna may contain multiple coil elements. The radio frequency antenna may also be referred to as a channel or antenna. The radio-frequency coil 314 is connected to a radio frequency transceiver 316. The radio-frequency coil 314 and radio frequency transceiver 316 may be replaced by separate transmit and receive coils and a separate transmitter and receiver. It is understood that the radio-frequency coil 314 and the radio frequency transceiver 316 are representative. The radio-frequency coil 314 is intended to also represent a dedicated transmit antenna and a dedicated receive antenna. Likewise, the transceiver 316 may also represent a separate transmitter and receivers. The radio-frequency coil 314 may also have multiple receive/transmit elements and the radio frequency transceiver 316 may have multiple receive/transmit channels. The transceiver 316 and the gradient controller 312 are shown as being connected to the hardware interface 106 of the computer system 102.

The memory 110 is further shown as containing pulse sequence commands 330. The pulse sequence commands are data which may be converted into commands which are used to control the magnetic resonance imaging system 302 to acquire measured k-space data 332. The memory 110 is further shown as containing measured k-space data 332 that has been acquired by controlling the magnetic resonance imaging system 302 with the pulse sequence commands 330.

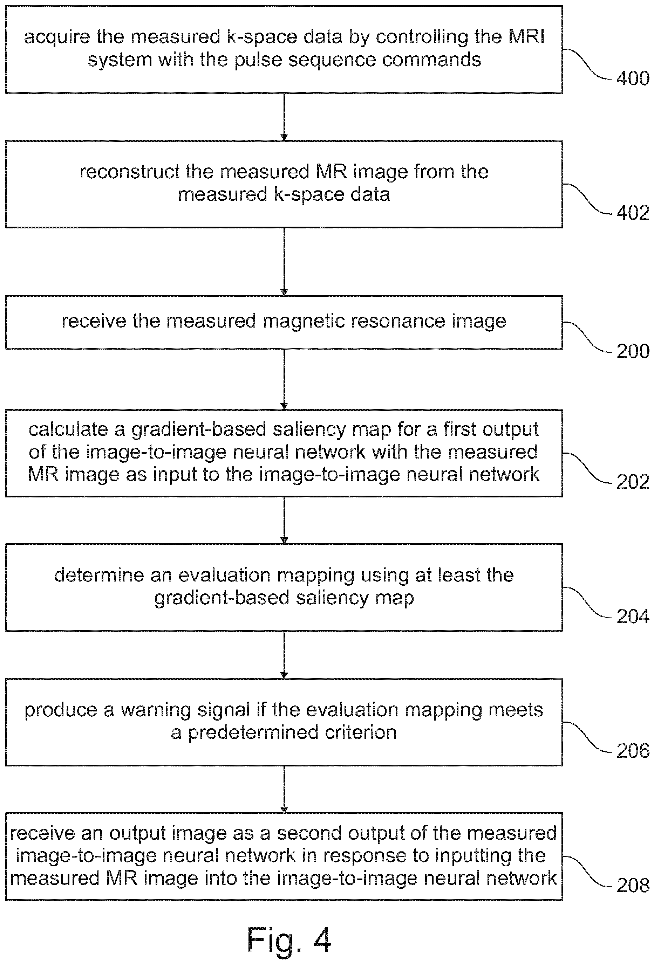

Fig. 4 shows a flowchart which illustrates a method of controlling the medical system 300 of Fig. 3. First, in step 400, the measured k-space data 332 is acquired by controlling the magnetic resonance imaging system 302 with the pulse sequence commands 330. Next, in step 402, the measured magnetic resonance image 124 is reconstructed from the measured k-space data 332. After step 402, steps 200, 202, 204, 206 and 208 are performed as was illustrated in Fig. 2.

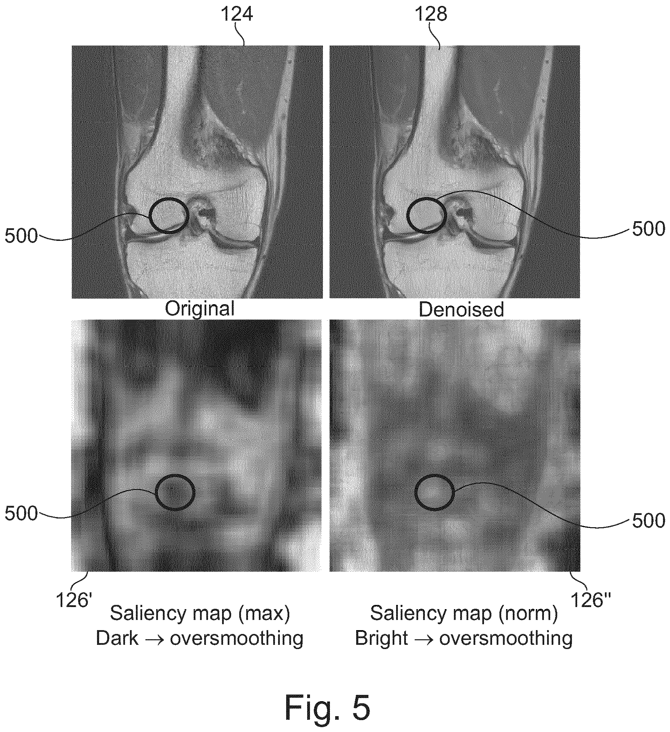

Fig. 5 illustrates a measured magnetic resonance image 124 and an output image 128. The output image 128 has been denoised. The region marked 500 is a region where there is oversmoothing in the denoised or output image 128. Below are two saliency maps 126', 126" that have been calculated. The gradient-based saliency map 126' is based using a per patch maximum. The gradient-based saliency map 126" uses a minimum-maximum normalization. It can be seen that the gradient-based saliency map 126" indicates the region 500 where there is oversmoothing. For the maximum patch technique, the low intensity indicates a strong smoothing or denoising in region 500 also.

Fig. 6 illustrates various examples of gradient-based saliency maps combined with an entropy map. In the upper left is an example of the measured magnetic resonance image 124. Below this is a patch-based entropy map 600. The image 602 is a combined map that has been calculated by multiplying the entropy map 600 x the gradient-based saliency map 126' calculated using a per patch maximum. The image 604 is calculated by multiplying the entropy map 600 x the gradient-based saliency map 126" calculated using the min-max normalization. Image 606 is an augmented magnetic resonance image formed by overlaying the combined map 602 over the denoised image 128 shown in Fig. 5. Image 608 is formed by overlaying the combined map 604 over the denoised image 128 also from Fig. 5.

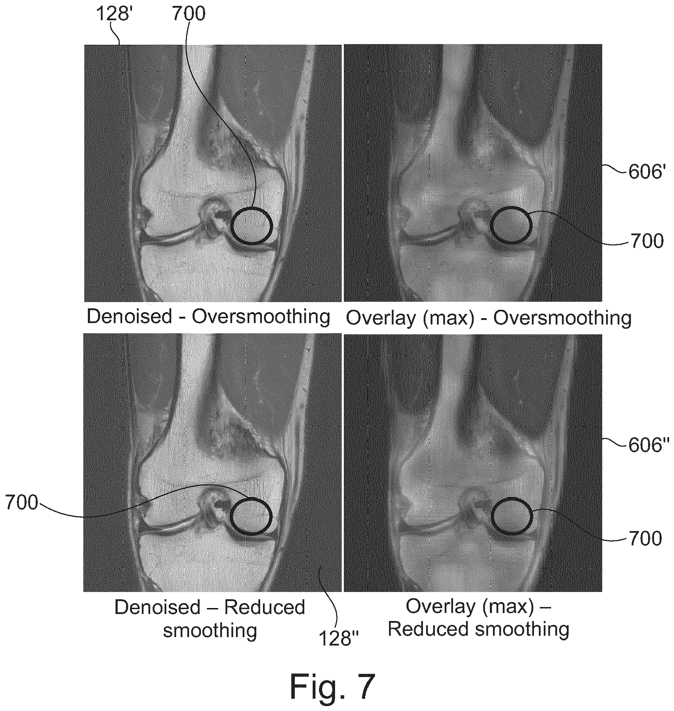

Fig. 7 shows an output image 128 that has oversmoothing in region 700. Adjacent to this is an augmented magnetic resonance image 606' that indicates this region of oversmoothing 700. Below these two images is a further output image 128" that has reduced smoothing. It can be seen that in the region 700 there is less oversmoothing. Adjacent to this is a further augmented magnetic resonance image 606" that indicates less oversmoothing in the oversmoothed region 700.

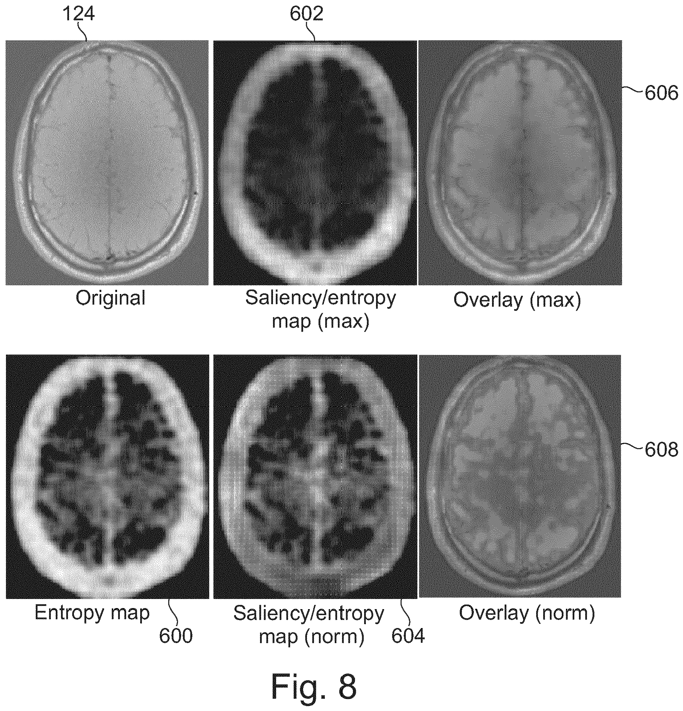

Fig. 8 illustrates a further example for a T1 weighted brain scan. Each image shown in Fig. 8 corresponds to an image of the knee shown in Fig. 6. In the upper left is the measured magnetic resonance image 124. Below this again is the entropy map 600. Image 602 shows a combined map 602 calculated using the per patch maximum. Below this is a combined map 604 calculated using the min-max normalization. Image 606 shows an augmented magnetic resonance image calculated by overlaying the combined map 602 over a denoised version or output image based on image 124. Below this is an augmented magnetic resonance image 608 calculated using min-max normalization and was constructed by overlaying the combined map 604 over the output image corresponding to the image 124.

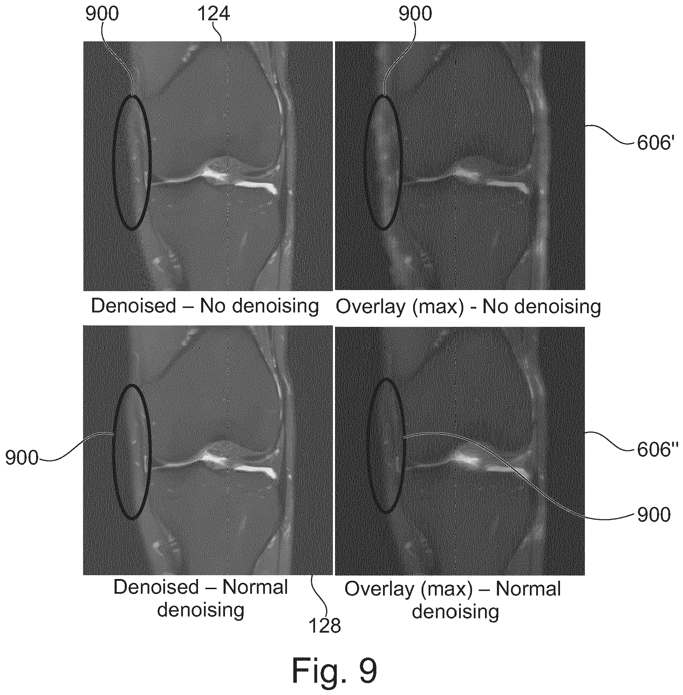

Fig. 9 illustrates an example where there is a denoising failure in image 606' marked by the region 900. In this example image 124, which is the measured magnetic resonance image, is shown above a denoised or output magnetic resonance image 128. The augmented magnetic resonance image 606' was constructed by overlaying the per patch maximum calculated combined map over the measured magnetic resonance image 124. It can be seen clearly that in the region 900 there are areas which are indicated as not having sufficient denoising. Below this the augmented magnetic resonance image 606" was calculated by overlaying the per patch maximum calculated combined map over the output image 128. In the image 606" it can be seen that the region 900 does not have a denoising problem.

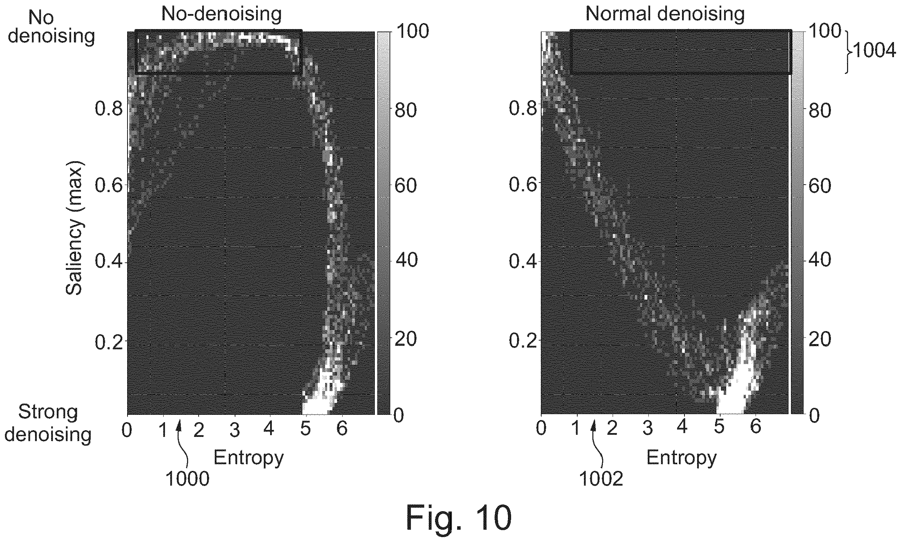

Fig. 10 shows two examples of a histogram 1000, 1002 calculated from corresponding pairs of voxels from a gradient-based saliency map 126 and an entropy map 600. In both cases the histogram 1000, 1002 are examined in a region above a predetermined saliency value 1004. The histogram 1000 shows a histogram where there is no denoising. It can be seen that in the region above the predetermined saliency value 1004 the histogram has a large number of values. The histogram 1002 represents a histogram from an image with a normal or proper denoising. It can be seen that in the region above the predetermined saliency value 1004, the histogram 1002 has fewer values. The number or average values in the region 1004 can therefore be used to determine if sufficient denoising has been performed on a measured magnetic resonance image.

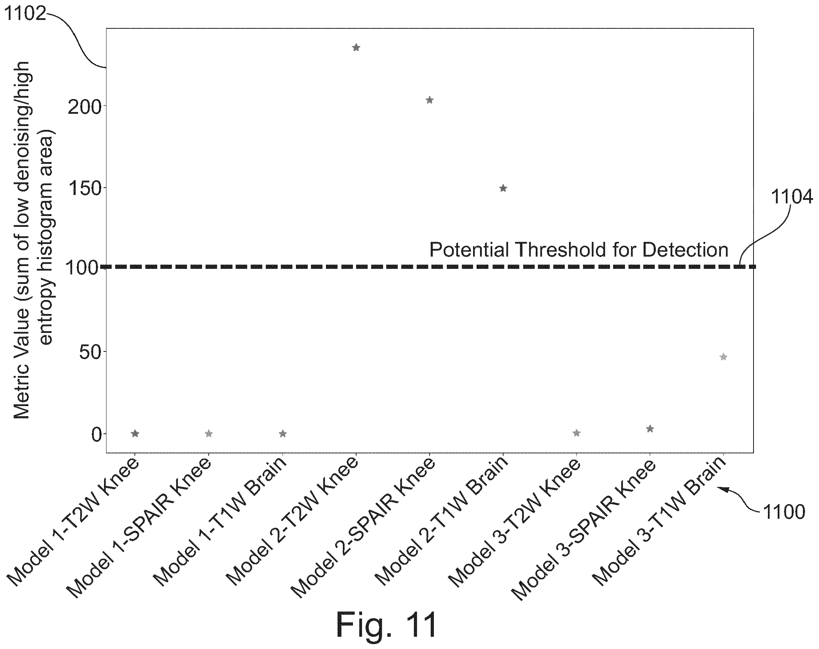

Fig. 11 shows a plot of a metric or denoising measure 1102 for detecting of a no-denoising failure. The denoising measure 1102 is derived from the boxes above the predetermined saliency value 1004 illustrated for example in histograms 1000 and 1002 in Fig. 10. Points above the threshold 1104 may indicate a denoising failure for that particular image.

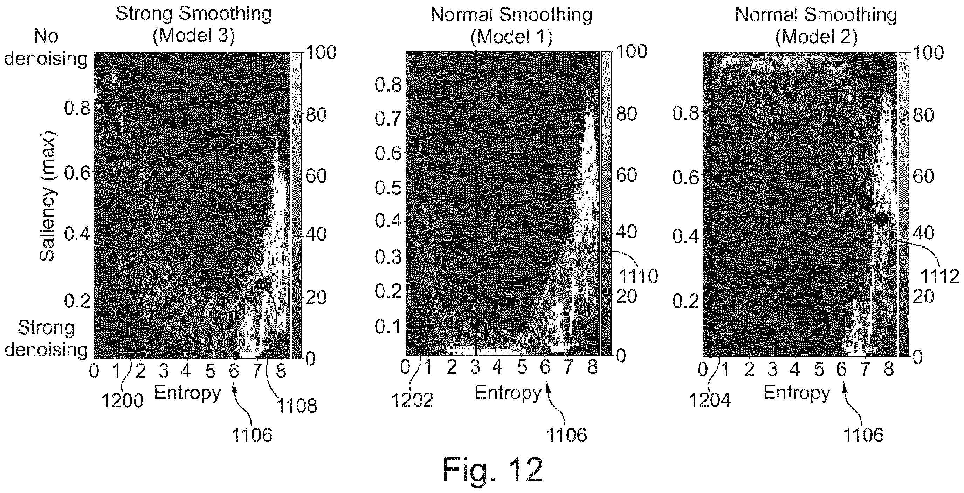

Fig. 12 shows three examples of entropy saliency histograms 1200, 1202, and 1204. Histogram 1200 shows an example where there is extremely strong smoothing of the measured magnetic resonance image. Image 1202 shows normal smoothing of the input magnetic resonance image and histogram 1204 shows normal smoothing of the measured magnetic resonance image using a different neural network. In all three examples, a center of mass 1108, 1110, 1112 was calculated for histogram values above a predetermined entropy threshold 1106. It can be seen that for the strong smoothing the center of mass 1108 has a lower saliency value than in the normal smoothing histograms 1202, 1204. The center of mass 1108, 1110, and 1112 may therefore be used to detect oversmoothing.

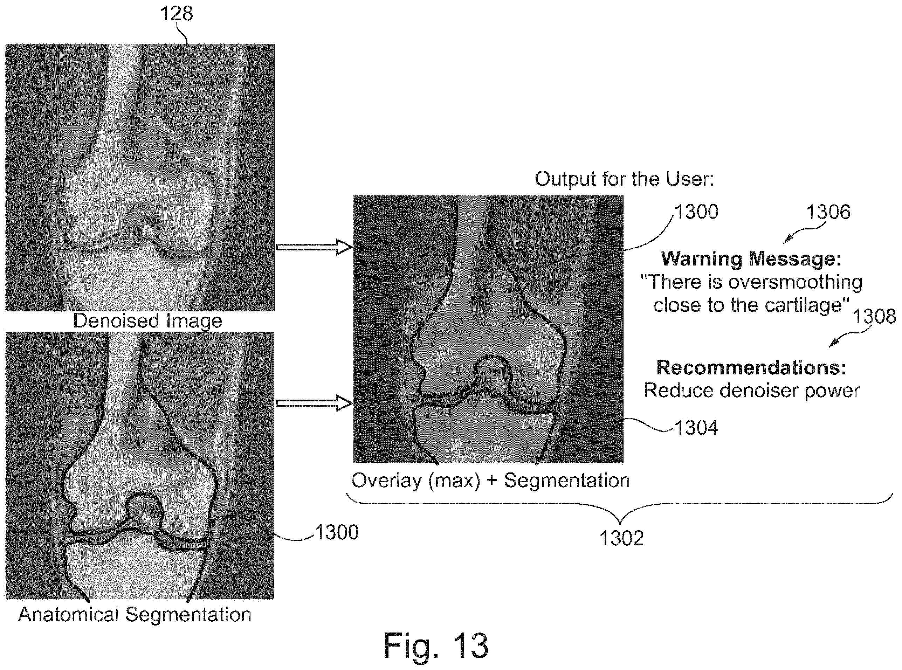

Fig. 13 illustrates the construction of an output for a user 1302 or a user interface which may be rendered. Image 128 is shown. This is an example of an output or a denoised image. The image below this 1300 shows the same image with an anatomical segmentation 1300. What is then displayed for the user or operator is an augmented magnetic resonance image with the segmentation 1300 overlaid on it. This enables the operator to see which anatomical regions may have oversmoothing. In this case there is a warning, 1306, which is provided warning there may be oversmoothing close to the cartilage. This warning 1306, may be used to retrieve recommendations from a recommendation database. For example, it may provide recommendation 1308 in this example, which is to reduce the denoiser power. This reduction in denoiser power could for example be provided by using a different neural network for providing the filtering or denoising function. If the denoising is provided as a residual output, in this case less of the residual may be subtracted from the original measured magnetic resonance image.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: hardware interface
- 108: user interface
- 110: memory
- 120: machine executable instructions
- 122: image-to-image neural network
- 124: measured magnetic resonance image
- 126: gradient-based saliency map
- 126': gradient-based saliency map using a per patch maximum
- 126": gradient-based saliency map using min max normalization
- 128: output image
- 130: evaluation mapping
- 132: predetermined criterion
- 134: warning signal
- 200: receive a measured magnetic resonance image
- 202: calculate a gradient-based saliency map for a first output of the image-to-image neural network with the measured magnetic resonance image as input to the image-to-image neural network 204 determine an evaluation mapping using at least the gradientbased saliency map
- 206: produce a warning signal if the evaluation mapping meets a predetermined criterion
- 208: receive an output image as a second output of the measured image-to-image neural network in response to inputting the measured magnetic resonance image into the image-to-image neural network
- 300: medical system
- 302: magnetic resonance imaging system
- 304: magnet
- 306: bore of magnet
- 308: imaging zone
- 309: field of view
- 310: magnetic field gradient coils
- 312: magnetic field gradient coil power supply
- 314: radio-frequency coil
- 316: transceiver
- 318: subject
- 320: subject support
- 330: pulse sequence commands
- 332: measured k-space data
- 400: acquire the measured k-space data by controlling the magnetic resonance imaging system with the pulse sequence commands
- 402: reconstruct the measured magnetic resonance image from the measured k-space data
- 500: region with oversmooting
- 600: entropy map
- 602: combined map (per patch maximum)
- 604: combined map (min max normalization)
- 606: augmented magnetic resonance image (per patch maximum)
- 606': augmented magnetic resonance image (per patch maximum)
- 606": augmented magnetic resonance image (per patch maximum)
- 608: augmented magnetic resonance image (min max normalization)
- 700: oversmoothed region
- 900: region with insufficient denoising
- 1000: histogram
- 1002: histogram
- 1004: region above a predetermined saliency value
- 1100: various measurements
- 1102: metric value
- 1104: threshold
- 1106: predetermined entropy threshold
- 1108: center of mass
- 1110: center of mass
- 1112: center of mass
- 1300: anatomical segmentation
- 1302: output for user
- 1304: augmented magnetic resonance image plus segmentation
- 1306: warning
- 1308: recommendation

## Claims

1. A medical system (100, 300) comprising:
- a memory (110) storing machine executable instructions (120) and an image-to-image neural network (122) configured as a magnetic resonance imaging artifact removal filter;
- a computational system (104), wherein execution of the machine executable instructions causes the computational system to:
- receive (200) a measured magnetic resonance image (124);
- calculate (202) a gradient-based saliency map (126) for a first output of the image-to-image neural network with the measured magnetic resonance image as input to the image-to-image neural network, wherein the gradient-based saliency map is calculated using a patch based algorithm with a predetermined patch size;
- determine (204) an evaluation mapping (130) using at least the gradient-based saliency map;
- produce (206) a warning signal (134) if the evaluation mapping meets a predetermined criterion; and
- receive (208) an output image (128) as a second output of the measured image-to-image neural network in response to inputting the measured magnetic resonance image into the image-to-image neural network.

2. The medical system of claim 1, wherein execution of the machine executable instructions further causes the computational system to calculate an entropy map (600) for the measured magnetic resonance image, wherein the entropy map is calculated using the predetermined patch size, wherein the evaluation mapping is determined using the gradient-based saliency map and the entropy map.

3. The medical system of claim 2, wherein the evaluation mapping comprises a histogram (1000, 1002) calculated from the gradient-based saliency map and the entropy map.

4. The medical system of claim 3, wherein execution of the machine executable instructions further causes the computational system to:
- calculate a smoothing measure from the histogram, wherein the smoothing measure is a center of mass (1108, 1110, 1112) for the histogram above a predetermined entropy threshold (1106); and
- provide the warning signal as an over-smoothing warning signal if the smoothing measure has a center of mass below a predetermined saliency map value.

5. The medical system of claim 3 or 4, wherein execution of the machine executable instructions further causes the computational system to:
- calculate a denoising measure (1102) from the histogram, wherein the denoising measure is an averaged value calculated from values above a predetermined saliency map value threshold (1004); and
- provide the warning signal as an insufficient denoising warning signal if the denoising measure has a center of mass above a predetermined threshold value.

6. The medical system of any one of claims 2 through 5, wherein execution of the machine executable instructions further causes the computational system to:
- calculate a combined map (602, 604) by multiplying corresponding patches of the entropy map and the gradient-based saliency map together; and
- preferably render an augmented magnetic resonance image (606, 606', 606"), wherein the augmented magnetic resonance image is formed by superimposing the combined map on the output image.

7. The medical system of claim 6, wherein execution of the machine executable instructions further causes the computational system to:
- calculate an image segmentation (1300) that divides the output image into multiple anatomical regions by inputting either the measured magnetic resonance image or the output image into an anatomical segmentation algorithm;
- calculate a segmentation measure for at least some of the multiple anatomical regions by calculating an average of the combined map within the at least some of the multiple anatomical regions; and
- provide an anatomical region-specific warning signal (1306) if the segmentation measure is above a predetermined value threshold.

8. The medical system of any one of the preceding claims, wherein the gradient-based saliency map (126") is calculated using a per patch min-max normalization.

9. The medical system of any one of claims 1 through 7, wherein the gradient-based saliency map (126') is calculated using a per patch maximum.

10. The medical system of any one of the preceding claims, wherein execution of the machine executable instructions further causes the computational system to perform any one of the following in response to the warning signal:
- replace the image-to-image neural network with an algorithmic magnetic resonance imaging artifact removal filter and recalculate the output image using the algorithmic magnetic resonance image artifact removal filter; and
- replace the image-to-image neural network with an alternative image-to-image neural network; and
- provide the warning signal when displaying the output image.

11. The medical system of any one of the preceding claims, wherein the medical system further comprises a magnetic resonance imaging system, wherein the memory further stores pulse sequence commands (330) configured to control the magnetic resonance imaging system to acquire measured k-space data, wherein execution of the machine executable instructions further causes the computational system to:
- acquire (400) the measured k-space data (332) by controlling the magnetic resonance imaging system with the pulse sequence commands; and
- reconstruct (402) the measured magnetic resonance image from the measured k-space data.

12. The medical system of any one of the preceding claims, wherein the image-to-image neural network is any one of the following: a U-net, ResNet, a cycleGAN, fully convolutional neural network, DenseNet, EfficientNet, Vision Transformer, and a fully connected neural network.

13. The medical system of any one of the following: wherein the magnetic resonance imaging artifact removal filter is any one of the following: a denoising filter, a motion artifact filter, a Gibbs ringing artifact filter, a blurring artifact filter, and a ghosting artifact filter, and a folding artifact filter.

14. A computer program comprising machine executable instructions (120) and an image-to-image neural network (122) configured as a magnetic resonance imaging artifact removal filter, wherein execution of the machine executable instructions causes the computational system to:
- receiving (200) a measured magnetic resonance image (124);
- calculating (202) a gradient-based saliency map (126) for a first output of the image-to-image neural network with the measured magnetic resonance image as input to the measured image-to-image neural network, wherein the gradient-based saliency map is calculated using a patch based algorithm with a predetermined patch size;
- determining (204) an evaluation mapping (130) using at least the gradient-based saliency map;
- producing (206) a warning signal (134) if the evaluation mapping meets a predetermined criterion; and
- receive (208) an output image (128) as a second output of the measured image-to-image neural network in response to inputting the measured magnetic resonance image into the image-to-image neural network.

15. A method of medical imaging, wherein the method comprises:
- receiving (200) a measured magnetic resonance image (124);
- calculating (202) a gradient-based saliency map (126) for a first output of an image-to-image neural network with the measured magnetic resonance image as input to the measured image-to-image neural network, wherein the image-to-image neural network is configured as a magnetic resonance imaging artifact removal filter, wherein the gradient-based saliency map is calculated using a patch based algorithm with a predetermined patch size;
- determining (204) an evaluation mapping (130) using at least the gradient-based saliency map;
- producing (206) a warning signal (134) if the evaluation mapping meets a predetermined criterion; and
- receiving (208) an output image (128) as a second output of the measured image-to-image neural network in response to inputting the measured magnetic resonance image into the image-to-image neural network.
